## Europäisches Patentamt

## European Patent Office

## Office européen des brevets

(19)

(11) Veröffentlichungsnummer: **0 103 291**
**B1**

(12) # EUROPÄISCHE PATENTSCHRIFT

(45) Veröffentlichungstag der Patentschrift:
**03.09.86**

(21) Anmeldenummer: **83108958.6**

(22) Anmeldetag: **10.09.83**

(51) Int. Cl.⁴: **B 23 B 51/10**, B 23 B 31/04

(54) **Bohr- und Entgratkopf und darin einspannbares Bohr- und Entgratwerkzeug und Verfahren zum Bohren und Entgraten eines Werkstücks.**

(30) Priorität: **15.09.82 DE 8225992 U**

(43) Veröffentlichungstag der Anmeldung:
**21.03.84 Patentblatt 84/12**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**EP-A-0 075 061**
**US-A-1 308 681**
**US-A-1 471 866**
**US-A-2 764 767**

(73) Patentinhaber: **KADIA- Diamant Maschinen- und Werkzeugfabrik O. Kopp GmbH & Co., Fabrikstrasse 2, D-7440 Nürtingen - Zizishausen (DE)**

(72) Erfinder: **Duffner, August, Ölberg 9, D-7745 Schonach (DE)**

(74) Vertreter: **Dreiss, Hosenthien & Fuhlendorf, Gerokstrasse 6, D-7000 Stuttgart 1 (DE)**

## Beschreibung

Die vorliegende Erfindung bezieht sich auf einen Bohr- und Entgratkopf zum Einspannen eines Bohr- und Entgratwerkzeuges, auf eine Kombination aus einem Bohr- und Entgratkopf und einem Bohr- und Entgratwerkzeug und auf die Verwendung eines in den Bohr- und Entgratkopf einge: spannten Bohr- und Entgratwerkzeugs zum Bohren und Entgraten eines Werkstücks, nach dem Oberbegriff des Anspruchs 1 bzw. 5 bzw. 7.

Beim Herstellen von Bohrungen in Werkstücken ist es notwendig, in einem ersten Arbeitsvorgang die Bohrung selbst mittels bspw. eines Spiralbohrers herzustellen und dann in einem zweiten Arbeitsgang und evtl. auch noch in einem dritten Arbeitsgang sowohl den äußeren als auch den inneren Bohrungsrand bspw. mittels eines Senkbohrers oder einer Entgratbürste zu entgraten. Dies ist relativ aufwendig nicht nur von der Werkzeugseite her, sondern auch in Bezug auf den Zeitaufwand, der zum Umrüsten oder zum Verfahren des Werkstücks oder des Werkzeugs bei Mehrspindelbohrautomaten erforderlich ist.

Aus der US-A 1 308 681 ist zur Verwendung in einer Revolverdrehbank oder dgl. Werkzeugmaschine ein Werkzeugkopf zum Einspannen eines Werkzeuges der im Oberbegriff des Anspruchs 1 genannten Art bekannt, dessen Spannkonus in dem ebenfalls mit einer sphärischen Innenfläche versehenen topfförmigen Bereich des Antriebselementes mittels Stell- und Klemmschrauben gehalten ist. Auf diese Weise kann die Rotationsachse des Spannkonus gegenüber der Rotationsachse des Antriebselementes eingestellt und in dieser Position klemmend gehalten werden, um zu erreichen, daß das Werkzeug, nachdem es nachgeschliffen worden ist, wieder in eine extrem genaue Lage bezüglich der Rotationsachse des Antriebselementes eingestellt werden kann. Abgesehen davon, daß diese genaue Positionierung des Werkzeugkopfes mit Hilfe der Stell- und Klemmschrauben relativ zeitaufwendig und umständlich ist, ist es mit dieser bekannten Konstruktion nicht möglich, an einem Werkstück ein Bohren und Entgraten ohne Unterbrechung durchzuführen.

Aufgabe der vorliegenden Erfindung ist es, einen Bohr- und Entgratkopf zum Einspannen eines Bohr- und Entgratwerkzeuges der eingangs genannten Art zu schaffen, mit dem das Bohren und Entgraten in einem einzigen Arbeitsgang, also ohne Werkzeugwechsel und/oder Positionswechsel von Bohrspindel oder Werkstück erfolgen kann.

Diese Aufgabe wird bei einem Bohr- und Entgratkopf der genannten Art durch die im Kennzeichen des Anspruchs 1 angegebenen Merkmale gelöst.

Durch diese Maßnahmen ist es möglich, nach dem Herstellen der Bohrung unmittelbar anschließend in ein und demselben Arbeitsgang beide Bohrungsränder zu entgraten bzw. mit einer Anfasung zu versehen. Das Verschwenken der Spannvorrichtung zum Entgraten der Bohrungsränder erfolgt durch den betreffenden Antrieb im wesentlichen impulsartig, welcher impulsartige Antrieb mit relativ einfachen und wenig raumaufwendigen Konstruktionsteilen herstellbar ist. Es versteht sich, daß der Antrieb für die Schwenkbewegung der Spannvorrichtung auch durch eine hydraulische Kolben-Zylinder Einheit erfolgen kann.

Der Vorgang des Entgratens kann in unterschiedlicher qualitativer Form vorgenommen werden, d.h., es ist möglich, gleichzeitig mit dem Entgraten auch eine Anfasung bestimmter Größe herzustellen. Um dies in wählbarer Weise vornehmen zu können, ist gemäß einem Ausführungsbeispiel am Bohr- und Entgratkopf ein Einstellring vorgesehen, der auf das Antriebselement aufschraubbar ist und der durch einen gewählten Abstand zum Spannkonus der Einstellung der Größe des Schwenkbereiches des Spannkonus dient. Je nach Größe des Schwenkbereiches, der bspw. maximal bis 7° sein kann, ergibt sich eine mehr oder weniger große bzw. breite Anfasung der Bohrungsränder.

Aus der US-A 1 471 866 ist ein Bohr- und Entgratwerkzeug in Form eines Bohrers mit einer Haupt- und einer Nebenschneide, die in einem Abstand von der Hauptschneide mit Entgratnuten versehen ist, bekannt geworden. Dieses Bohr- und Entgratwerkzeug ist zur Durchführung des Vorganges des Entgratens an seinem Einspannende derart ausgebildet und in einer Aufnahme gehalten, daß ein exzentrisches Versetzen des Werkzeugs dann stattfindet, wenn das Werkzeug am Ende seiner für den Bohrvorgang maßgebenden Schneiden mit einer konischen Führung an den Bohrungsrand des Werkstücks zur Anlage kommt. Dies bedeutet, daß das Werkzeug zur Durchführung des Entgratvorganges über die gesamte Länge der Nebenschneiden bis zum Beginn des Werkzeugschaftes verfahren werden muß, was relativ lange Zeit in Anspruch nimmt. Dem gegenüber ist gemäß einem Ausführungsbeispiel vorliegender Erfindung eine Kombination aus einem Bohr- und Entgratkopf der eingangs genannten Art und einem Bohr- und Entgratwerkzeug in Form eines Bohrers mit mindestens einer Haupt- und einer Nebenschneide, die in einem Abstand von der Hauptschneide mit mindestens einer Entgratnut versehen ist, deren Vorder- und Rückflanke als Schneide ausgebildet ist, vorgesehen, bei der das Bohr- und Entgratwerkzeug die Form eines Spiralbohrers besitzt und in der Spannvorrichtung des Bohr- und Entgratkopfes derart eingespannt ist, daß seine Entgratnut in Richtung der Verschwenkbewegung zeigt. Auf diese Weise kann die Entgratnut in unmittelbare Nachbarschaft zur Spitze des Werkzeugs gebracht werden, da die Einspannlage des Werkzeugs und die Verschwenkbewegung aneinander angepasst sind.

Gemäß einem weiteren Ausführungsbeispiel vorliegender Erfindung ist desweiteren bei der Verwendung eines in den Bohr- und Entgratkopf der eingangs genannten Art eingespannten Bohr- und Entgratwerkzeug in Form eines Bohrers mit mindestens einer Haupt- und einer Nebenschneide, die in einem Abstand von der Hauptschneide mit mindestens einer Entgratnut versehen ist, deren Vorder- und Rückflanke als Schneide ausgebildet ist, zum Bohren und Entgraten eines Werkstückes vorgesehen, daß zunächst die mindestens eine Durchgangsbohrung im Werkstück gebohrt wird, daß dann der axiale Werkzeugvorschub unter weiterer Rotation des Werkzeugs in der Stellung stillgesetzt wird, in der die Entgratnut, deren axiale Länge gleich der Dicke des gebohrten Werkstückes ist, innerhalb der hergestellten Durchgangsbohrung angeordnet ist, und daß danach die das Werkzeug haltende nach wie vor rotierende Spannvorrichtung im Bohr- und Entgratkopf zum Entgraten verschwenkt wird.

Weitere Ausgestaltungen der Erfindung sind der folgenden Beschreibung zu entnehmen, in der die Erfindung anhand der in der Zeichnung dargestellten Ausführungsbeispiele näher beschrieben und erläutert ist. Es zeigen:

Figur 1 eine Darstellung, teilweise in Ansicht und teilweise im Längsschnitt eines Bohr- und Entgratkopfes gemäß einem bevorzugten Ausführungsbeispiel vorliegender Erfindung, mit einem eingespannten Bohr- und Entgratwerkzeug gemäß einem bevorzugten Ausführungsbeispiel vorliegender Erfindung,

Figur 2 einen Schnitt längs der Linie II-II der Figur 1,

Figur 3 in geschnittener schematischer Dar stellung das Bohr- und Entgratwerkzeug in den beiden Arbeitsstellungen, wobei es in ein ebenes Werkstück eingetaucht ist.

Figur 4 im Querschnitt ein gewölbtes Werkstück, das mit einem Bohr- und Entgratwerkzeug gemäß einer Variante des Werkzeugs der Fig. 3 bearbeitet ist, und

Figur 5 in schematischer übereinander angeordneter Darstellung ein zylindrisches Werkstück, dessen gegenüberliegende, fluchtende Bohrungen mittels eines Bohr- und Entgratwerkzeuges gemäß einem anderen Ausführungsbeispiel vorliegender Erfindung hergestellt sind.

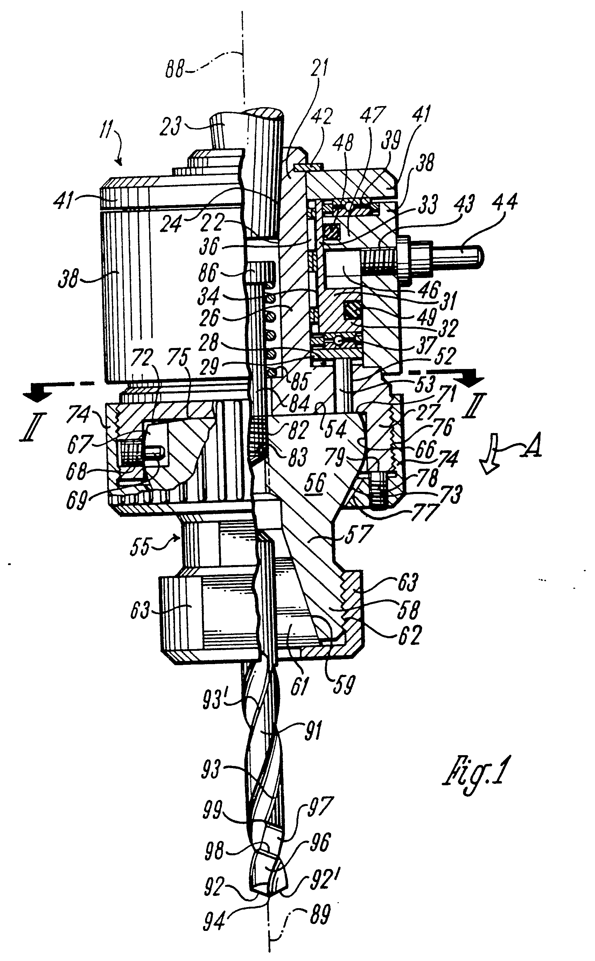

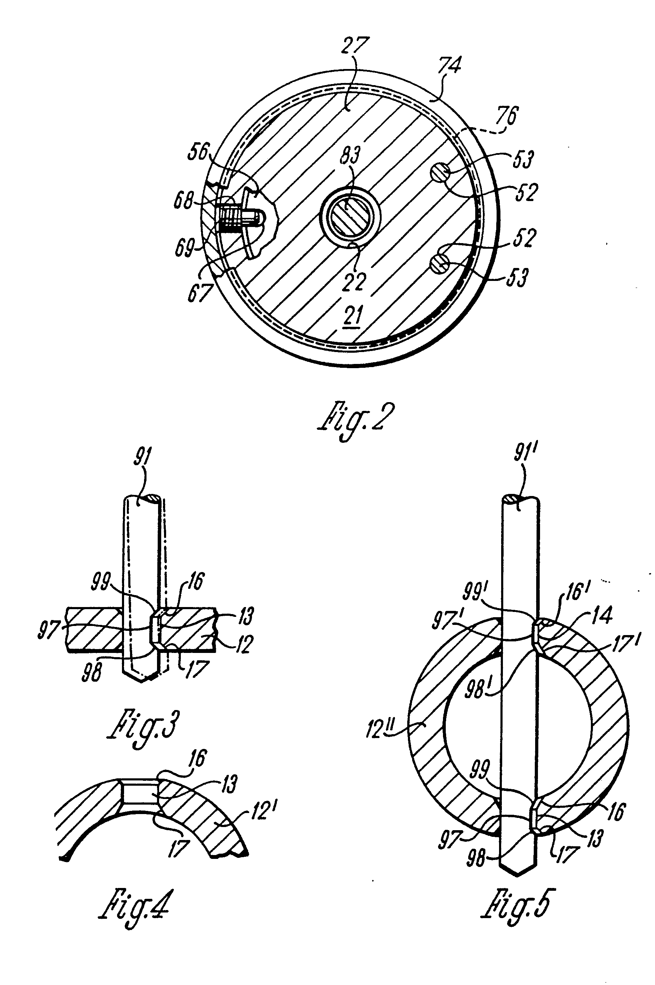

Der in den Fig. 1 und 2 gemäß einem bevorzugten Ausführungsbeispiel vorliegender Erfindung dargestellte Bohr- und Entgratkopf 11 dient in erbindung mit einem in den Fig. 3 bis 5 gemäß zweier Ausführungsbeispiele dargestellten Bohr- und Entgratwerkzeug 91 bzw. 91' dazu, in einem Arbeitsgang in einem Werkstück 12, 12' bzw. 12'' eine oder zwei Durchgangsbohrungen 13, 14 herzustellen und diese Durchgangsbohrungen 13, 14 sowohl an der Ein- und Auslaufkante 16, 16' bzw. 17, 17' zu entgraten und dadurch ggf. mit einer Anfasung zu versehen. Die Werkstücke 12, 12', 12'' können dabei entweder eben, gewölbt oder hohl sein. Der Bohr- und Entgratkopf 11 ist derart ausgebildet, daß er auf jeder beliebigen automatischen Bohrspindel zum Einsatz kommen kann.

Der erfindungsgemäße Bohr- und Entgratkopf besitzt ein hohles Antriebselement 21, das eine längsmittige axiale gestufte Durchgangsbohrung 22 aufweist, deren hinteres Ende zum drehfesten Verbinden mit einem Antriebszapfen 23 mit einem Innengewinde oder einem Morsekonus versehen ist. Der Antriebszapfen 23 ist so ausgebildet, daß er in eine Bohrspindel, Bohrfutter oder dgl. einer Werkzeugmaschine einspannbar ist. Das einstückige Antriebselement 21 besitzt einen hinteren schaftförmigen Bereich 26 und einen vorderen topfförmigen Bereich 27, die außenumfangsseitig im wesentlichen zylindrisch ausgebildet sind und die unterschiedliche Außen- und Innendurchmesser aufweisen, wobei sie koaxial zueinander angeordnet sind und das hintere Ende des topfförmigen Bereichs 27 eine axiale Ringfläche 28 aufweist, die unmittelbar an den Außenumfang des schaftförmigen Bereichs 26 anschließt und einen Außendurchmesser besitzt, der kleiner als der Außendurchmesser des topfförmigen Bereichs 27 ist. Der axialen Ringfläche 28 des topfförmigen Bereichs 27 in einem kleinen Abstand gegenüberliegend ist eine Ringscheibe 29 angeordnet, deren radiale Abmessungen denen der axialen Ringfläche 28 entspricht, die also den schaftförmigen Bereich 26 des Antriebselementes 21 konzentrisch und unmittelbar umgibt. An die Ringscheibe 29 nach hinten anschließend ist ein Ringkolben 31 vorgesehen, der aus einem hohlen Bundteil 32 größeren Durchmessers und einem hohlen Schaftteil 33 kleineren Durchmessers besteht. Die Durchgangsbohrung 34 des Ringkolbens 31 ist derart ausgebildet, daß zwischen dem Außenumfang des schaftförmigen Bereichs 26 des Antriebselementes 21 und dem Innenumfang des Ringkolbens 31 ein radiales Nadellager 36 angeordnet ist. Der Ringkolben 31 ist derart angeordnet, daß der Ringscheibe 29 der Bundteil 32 des Ringkolbens 31 gegenüberliegt, wobei zwischen Ringscheibe 29 und Bundteil 32 ein axiales Drucklager 37 angeordnet ist.

Um die Ringscheibe 29 und den Ringkolben 31 ist eine Gehäusehülse 38 angeordnet, die sich einenends am topfförmigen Bereich 27 des Antriebselementes 21 und andernends über ein axiales Drucklager 39 an einer Endscheibe 41 abstützt, welche von einem im schaftförmigen Bereich 26 des Antriebselementes 21 gehaltenen Seegerring 42 axial festgehalten ist. An einer Stelle des Umfanges der ortsfesten, also nicht mitrotierenden Gehäusehülse 38 ist eine Bohrung 43 vorgesehen, in die von der Außenumfangsseite her ein Schlauchanschlußnippel 44 zur Druckluftzuführung eingeschraubt ist. Dieser Bohrung 43 gegenüberliegend ist eine ringförmige Luftkammer 46, die der Bohrung gegenüberliegend von dem betreffenden Außenumfangsflächenbereich des Schaftteils 33 des Ringkolbens 31 und in axialer Richtung einerseits von der zugewandten Ringfläche des Bundteils 32 des Ringkolbens 31 und andererseits von der zugewandten Ringfläche eines radial nach innen vorstehenden Bundes 47 der Gehäusehülse 38 begrenzt ist. Dieser Innenbund 47 der Gehäusehülse 38 und der Bundteil 32 des Ringkolbens 31 sind dem Schaftteil 33 des Ringkolbens 31 bzw. der Gehäusehülse 38 gegenüber mittels eines O-Ringes 48 bzw. 40 druckluftdicht abgedichtet.

Im topfförmigen Bereich 27 des Antriebselementes 21 sind gemäß Fig. 2 an zwei Bereichen Bohrungen 52 vorgesehen, die jeweils einen Druckstift 53 aufnehmen, der so lang ist, daß er sich im Ruhezustand des Bohr- und Entgratkopfes 11 einerseits an der Ringscheibe 29, die in einem Abstand von der Ringfläche 28 angeordnet ist, abstützt und andererseits bis zum Grund 54 des topfförmigen Bereichs 27 reicht bzw. mit diesem bündig ist. Die beiden Druckstifte 53 liegen auf einem gemeinsamen Durchmesser und einer diesen Durchmesserkreis schneidenden Sekante. Mit anderen Worten, die beiden Druckstifte 53 sind also lediglich auf der einen halbringförmigen Seite der Ringscheibe 29 bzw. des topfförmigen Bereichs 27 angeordnet.

Im topfförmigen Bereich 27 des Antriebselementes 21 ist der hintere Bereich 56 eines Spannkonus 57 einer Spannvorrichtung 55 drehfest aufgenommen. Der vordere Bereich 58 des Spannkonus 57 besitzt einen Innenkonus 59, in den ein von beiden Seiten her intermittierend geschlitzter Spannkegel 61 der Spannvorrichtung 55 eingesetzt ist, der das Bohr- und Entgratwerkzeug 91 bzw. 91' eingespannt aufnehmen kann. Dazu ist über das Außengewinde 62 des vorderen Bereichs 58 des Spannkonus 57 eine hülsenförmige Spannmutter 63 aufgeschraubt, die mit ihrem Bodenteil den Spannkegel 61 in den Innenkonus 59 des vorderen Spannkonusbereichs 58 drückt und damit das Werkzeug 91, 91' reibschlüssig hält.

Der hintere Bereich 56 des Spannkonus 57 ist an seiner Außenumfangsfläche 66 kugelförmig ausgebildet, wobei der Durchmesser der Teilkugel dieser Fläche 66 gleich dem Innendurchmesser des innen zylindrischen topfförmigen Bereichs 27 des Antriebselementes 21 ist. An einer Stelle des Umfanges, die dem Umfangsbereich der beiden Druckstifte 53 etwa gegenüberliegt, ist die Kugelfläche 66 mit einer axialen Nut 67 versehen, deren axiale Länge über eine wesentliche Teillänge des hinteren Spannkonusbereichs 56 verläuft. Dieser axialen Nut 67 gegenüberliegend ist in der zylindrischen Wandung des topfförmigen Bereichs 27 des Antriebselementes 21 eine radiale Gewindebohrung 68 vorgesehen, in die ein Mitnehmerstift 69 einschraubbar ist, dessen inneres Ende in die axiale Nut 67 ohne wesentliches Spiel in Umfangsrichtung radial eindringt, und so eine drehfeste Verbindung zwischen dem Antriebselement 21 und dem Spannkonus 57 schafft. Der Durchmesser des Mitnehmerstiftes 69 ist jedoch kleiner als die Nut 67 in axialer Richtung lang ist. Die Auflagefläche 71 des hinteren Spannkonusbereichs 56 ist im wesentlichen eben ausgebildet und liegt unmittelbar auf der ebenfalls ebenen Fläche des Grundes des schaftförmigen Bereichs 26 auf. Im Bereich der axialen Nut 67 ist jedoch der hintere Spannkonusbereich 56 mit einer Abschrägung 72 versehen, die etwa im Bereich des halben Durchmessers an einer sekantenartig verlaufenden Kippkante 75 beginnt und dem topfförmigen Bereich 27 abgewandt schräg nach vorne verläuft. Die Kugelfläche 66 geht über eine konische Fläche 73 in den vorderen Spannkonusbereich 58 über.

Der topfförmige Bereich 27 des Antriebselementes 21 ist mit einem Außenfeingewinde 76 versehen, auf das ein Stellring 74 in Form einer Überwurfmutter aufschraubbar ist. Dieser Stellring 74 ist mit einer konischen Ausnehmung 77 versehen, durch die die konische Fläche 73 des Spannkonus 57 dringt. Der Bodenbereich des Stellringes 74 ist mit über den Umfang gleichmäßig verteilt angeordneten vorzugsweise drei Gewindebohrungen versehen, in die Klemmschrauben 78 einschraubbar sind, welche sich an der vorderen Stirnfläche 79 des topfförmigen Bereichs 27 abstützen.

Der Spannkonus 57 ist im hinteren Bereich 56 ferner mit einer längsmittigen Innengewindebohrung 82 versehen, in die eine Schraube 83 mit ihrem einen Ende einschraubbar ist und die innerhalb der gestuften Durchgangsbohrung 22 des Antriebselementes 21 aufgenommen ist. Der Schaft 84 der Schraube 83 ist von einer Rückholdruckfeder 85 umgeben, die sich einenends am Kopf 86 der Schraube 83 und andernends an einer axialen inneren Ringfläche des Antriebselementes 21 abstützt.

Die Funktion des Bohr- und Entgratkopfes 11 ist folgende: In der in Fig. 1 dargestellten, nicht beaufschlagten Ausgangsstellung des Bohr- und Entgratkopfes 11 liegen die Rotationsachse 88 des Antriebselementes 21 und die Längsache 89 des Spannkonus 57 und damit des eingespannten Bohrund Entgratwerkzeuges 91 in einer Flucht. In dieser Stellung wird der Bohr- und Entgratkopf 11 bspw. von einer Bohrspindel rotierend angetrieben. Wird nun über den Anschlußnippel 44, der mit einer Druckluftsteuerung verbunden ist, Druckluft in die Luftkammer 46 eingeblasen, so bewegt sich der Ringkolben 31 in axialer Richtung nach unten, was bedeutet, daß sich die beiden Druckstifte 53 in die gleiche Richtung bewegen und auf die Auflagefläche 71 des hinteren Bereiches 56 des Spannkonus 57 drücken. Da der Spannkonus 57 mit einer Kugelfläche 66 versehen ist, kann er um die Kippkante 75, die parallel zur Verbindungslinie der beiden Druckstifte 53 verläuft, zwischen Auflagefläche 71 und Abschrägung 72 in Richtung des Pfeiles A verschwenkt werden, so daß die beiden Achsen 88 und 89 nicht mehr miteinander fluchten, sondern die Längsachse 89 gegenüber der Rotationsachse 88 einen spitzen Winkel von beim Ausführungsbeispiel maximal 7° besitzt. Die Größe der Schwenkbewegung ist vom Stellring 74 begrenzt, d.h. durch das Anschlagen der Kugelfläche 66 bzw. der Konusfläche 73 an der konischen Ausnehmung 77 des Stellrings 74. Das Spiel zwischen diesen einander gegenüberliegenden Flächen hängt von der Einschraubtiefe des Stellrings 74 ab. Die Verschwenkbewegung ist entgegen der Wirkung der Rückholfeder 85 erfolgt, so daß bei Abschalten der Druckluft und Entlüften der Luftkammer 46 diese Rückholfeder 85 bewirkt, daß der Spannkonus 57 über die sich wieder in Rotationsrichtung stellende Schraube 83 wieder zurückgezogen wird, derart, daß die einander zugewandten ebenen Flächen 71 und 54 wieder aneinanderliegen.

Fig. 1 zeigt auch das Bohr- und Entgratwerkzeug 81 gemäß einem ersten Ausführungsbeispiel vorliegender Erfindung. Dieses Bohr- und Entgratwerkzeug 91 ist aus einem üblichen Spiralbohrer entstanden, der mit jeweils zwei vorderen gegenüberliegenden Hauptschneiden 92, 92' und zwei einander gegenüberliegenden wendelförmig umlaufenden Nebenschneiden 83 bzw. 93' versehen ist. In einem Bereich hinter der Bohrerspitze 84 sind die Nebenschneide 83 und die benachbarte Nebenfreifläche 86 des Werkzeugs 91 mit einer Entgratnut 87 versehen, deren beide Flanken mit in Umfangsrichtung wirkenden Schneiden 98, 99 versehen sind. Die Lage dieser einen Entgratnut 97 im Bezug auf die Bohrerspitze 84 hängt von der gewünschten Möglichkeit ab, die Hauptschneiden 92, 82' des Spiralbohrers nachschleifen zu können. Die Entgratnut 97 kann sich also unmittelbar oder in einem bestimmten Abstand an die Hauptschneiden 92, 92' bzw. die Bohrerspitze 94 anschließen. Bei diesem Ausführungsbeispiel ist das Bohr- und Entgratwerkzeug 81 im Bereich der Bohrerspitze 94 an den Hauptschneiden 82, 92' und/oder über den gesamten Schneidteil des Spiralbohrers einschließlich der Flanken 98, 99 der Entgratnut 87 mit Diamantpulver belegt, so daß auch harte Werkstoffe gebohrt und gleichzeitig entgratet werden können.

Figur 3 zeigt den verfahrensmäßigen Vorgang des Bohrens und Entgratens in einem Arbeitsgang. Das Einspannen des Bohr- und Entgratwerkzeuges 91 in den Bohr- und Entgratkopf 11 erfolgt gemäß Fig. in der Weise, daß die Schneidflanken 98, 99 der Entgratnut 97 den beiden Druckstiften 53 im Antriebselement 21 diametral gegenüberliegen. Zunächst wird die Durchgangsbohrung 13 im ebenen Werkstück 12, also bspw. einer Platte bestimmter Dicke, gebohrt. Ist das Bohr- und Entgratwerkzeug 91 mit seiner Entgratnut 97, deren axiale Länge gleich der Dicke des zu bohrenden Werkstücks 12 entspricht, innerhalb der Durchgangsbohrung 13 (Darstellung in ausgezogenen Linien), so wird mittels eines eingestellten mechanischen Anschlages oder einer sonstigen elektronischen Abtastung der Bohrvorschub gestoppt und dem Ringkolben 31 während der Rotationsbewegung des Bohr- und Entgratwerkzeuges 91 Druckluft für einen kurzen Impulszeitraum zugeführt. Während dieses kurzen Zeitraumes wird der Spannkonus 57 und damit das Bohr- und Entgratwerkzeug 91 derart verschwenkt, daß sich die Entgratnut 87 zum Bohrungsrand bzw. zur Einlauf- und Auslaufkante 16, 17 hin verschwenkt. Diese beiden Kanten 16, 17 werden dadurch von den Schneidflanken 88, 98 der Entgratnut 97 erfasst und dadurch entgratet und entsprechend der strichpunktierten Darstellung mit einer Anfasung versehen. Da die Entgratnut 97 zwei Schneidflanken 88 und 89 besitzt, erfolgt dieses Entgraten der Bohrung 13 sowohl an der Einlaufals auch an der Auslaufkante 16, 17. Da es sich hier um ein ebenes Werkstück 12 handelt, sind die Neigungswinkel der beiden Schneidflanken 98, 99 der Entgratnut 87 in Bezug auf die Rotationsachse gleich ausgebildet. Sie liegen bspw. bei etwa 45°.

Figur 4 zeigt ein gewölbtes Werkstück 12', das mit einer beidkantig entgrateten Durchgangsbohrung 13 versehen ist. Da bei diesem gewölbten Werkstück 12' die Bogenlänge über den Durchmesser der Durchgangsbohrung 13 hinweg außen und innen verschieden ist, sind auch die Winkel der Flanken 98 und 98 der Entgrantnut 97 unterschiedlich ausgebildet. Beim Ausführungsbeispiel ist die in Bohrrichtung vordere Schneidflanke 88 bspw. unter einem Winkel von 35° und die in Bohrrichtung hintere Schneidflanke 99 bspw. unter einem Winkel von 40° zur Rotationsachse des Bohr- und Entgratwerkzeuges 91 angeordnet.

Beim in Figur 5 dargestellten Ausführungsbeispiel vorliegender Erfindung ist ein Bohr- und Entgratwerkzeug 91' dargestellt, das in der Lage ist, in einem hohlen Werkstück 12'', bspw. einem Zylinder, zwei in einer axialen Flucht liegende Durchgangsbohrungen 13 und 14 nacheinander zu bohren und gleichzeitig zu entgraten. Dies erfolgt in der Weise, daß das Bohr- und Entgratwerkzeug 91' außer der vorderen Entgratnut 87 eine hintere Entgratnut 87' mit Schneidflanken 88' und 89' aufweist, deren axialer Abstand gleich dem Abstand der beiden in einer Flucht liegenden Durchgangsbohrungen 13 und 14 entspricht. Da bei diesem Ausführungsbeispiel bei einem Verschwenken des Bohr- und Entgratwerkzeugs 91' um einen bestimmten Winkel gegenüber der Rotationsachse 88 des Antriebselementes 21 die sich daraus ergebende Bogenlänge bezüglich der vorderen Entgratnut 97 und der hinteren Entgratnut 87' unterschiedlich ist, müssen auch deren Tiefen unterschiedlich sein. So ist die vordere Entgratnut 97 tiefer als die hintere Entgratnut 87', so daß auf diese Weise ein im wesentlichen gleichmäßiges Entgraten aller vier Einlaufbzw. Auslaufkanten 16, 17 bzw. 16', 17' der Durchgangsbohrungen 13, 14 erfolgt. Auch hier ist das Bohr- und Entgratwerkzeug 91' ggf. im Bereich der Hauptschneiden und/oder der Nebenschneiden und der Schneidflanken der Entgratnuten diamantiert. Die Winkel der Schneidflanken der beiden Entgratnuten 97 und 87' sind auch hier entsprechend der Geometrie des gewölbten Körpers im Bereich der Durchgangsbohrungen unterschiedlich gewählt. Die beiden Entgratnuten 97, 87' liegen in einer axialen Flucht entweder in der gleichen oder in verschiedenen Nebenschneiden 93, 83'.

Es versteht sich, daß in allen Fällen der Winkel der Schneidflanken 98, 99 bzw. 98', 88' der Entgratnuten 97 bzw. 97' nicht nur von der Geometrie des Werkstücks abhängig ist, sondern auch von der Größe der eingestellten Schwenkbewegung des Bohr- und Entgratwerkzeugs 91, 91' und auch von der Tatsache, ob man sowohl an der Einlaufkante 16, 16' als auch an der Auslaufkante 17, 17' im wesentlichen dieselbe Entgratung bzw. Größe der Anfasung wünscht.

Beim dargestellten Ausführungsbeispiel ist die Spannvorrichtung pneumatisch angesteuert bzw. bewegt. Es versteht sich, daß auch andere Antriebsarten möglich sind, wie bspw. hydraulisch.

**Patentansprüche**

1. Bohr- und Entgratkopf (11) zum Einspannen eines Bohr- und Entgratwerkzeuges (91, 91') mit einer einen Spannkonus (57) und einen Spannkegel (61) aufweisenden Spannvorrichtung (55), die mit einem mit einer rotierend angetriebenen Bohrspindel oder dgl. kuppelbaren Antriebselement (21) drehfest verbindbar ist und die bezüglich ihrer Längsachse (89) gegenüber der Rotationsachse (88) des Antriebselementes (21) in der Weise verschwenkbar gehalten ist, daß der Spannkonus (57) mit seinem hinteren, eine kugelförmige Umfangsfläche (66) aufweisenden Bereich (56) in einem topfförmigen Bereich (27) des Antriebselementes (21) bewegbar gehalten ist, dadurch gekennzeichnet, daß die Verschwenkungsbewegung der Spannvorrichtung (55) gegenüber dem Antriebselement (21) mittels einer vorzugsweise pneumatischen Kolben-Zylinder-Einheit (31) erfolgt, die einseitig beaufschlagbar ist und daß eine die Spannvorrichtung (55) in ihre Ausgangslage bringende Rückholvorrichtung (83, 85) vorgesehen ist.

2. Bohr- und Entgratkopf nach Anspruch 1, dadurch gekennzeichnet, daß der Spannkonus (57) im mit einer Innenzylinderfläche versehenen topfförmigen Bereich (27) des Antriebselementes (21) in koaxialer Lage durch die Rückholvorrichtung (83, 85) gehalten ist, die aus einer mit dem Spannkonus (57) verbundenen, in eine axiale Bohrung des Antriebselementes (21) eintauchenden Schraube (83) und einer sich zwischen Antriebselement (21) und Schraubenkopf (86) abstützenden Druckfeder (85) besteht.

3. Bohr- und Entgratkopf nach Anspruch 1 oder 2, dadurch gekennzeichnet, daß der hintere Bereich (56) des Spannkonus (57) der Spannvorrichtung (55) mittels mindestens eines Druckstiftes (53) von der Rückfläche her vom Grund des topfförmigen Bereiches (27) des Antriebselementes (21) abhebbar beaufschlagbar ist, und daß die Rückfläche des Spannkonus (57) dem Druckstift (53) diametral gegenüberliegend unter Bildung einer Kippkante (75) mit einer nach vorne geneigten Kippfläche (72) versehen ist.

4. Bohr- und Entgratkopf nach Anspruch 3, dadurch gekennzeichnet, daß die Größe der Abhebbewegung des Spannkonus (57) mittels eines auf dem topfförmigen Bereich (27) des Antriebselementes (21) aufschraubbaren Stellringes (74) einstellbar ist.

5. Kombination aus einem Bohr- und Entgratkopf (11) nach einem der Ansprüche 1 bis 4 und einem Bohr- und Entgratwerkzeug (91, 91') in Form eines Bohrers mit mindestens einer Haupt- (92) und einer Nebenschneide (93), die in einem Abstand von der Hauptschneide (92) mit mindestens einer Entgratnut (97) versehen ist, deren Vorder- und Rückflanke (98, 99) als Schneide ausgebildet ist, dadurch gekennzeichnet, daß das Bohr- und Entgratwerkzeug (91, 91'), das die Form eines Spiralbohrers besitzt, in der Spannvorrichtung (55) des Bohr- und Entgratkopfes (11) derart eingespannt ist, daß seine Entgratnut (97, 97') in Richtung der Verschwenkbewegung zeigt.

6. Kombination nach Anspruch 5, dadurch gekennzeichnet, daß die Entgratnut (97, 97') des Bohr- und Entgratwerkzeugs (91, 91') dem der Schwenkbewegung der Spannvorrichtung (55) dienenden Druckstift (53) diametral gegenüberliegend angeordnet bzw. in den Bohr- und Entgratkopf (11) eingespannt ist.

7. Verwendung eines in den Bohr- und Entgratkopf (11) nach einem der Ansprüche 1 bis 4 eingespannten Bohr- und Entgratwerkzeugs (91, 91') in Form eines Bohrers mit mindestens einer Haupt- (92) und einer Nebenschneide (93), die in einem Abstand von der Hauptschneide (92) mit mindestens einer Entgratnut (97) versehen ist, deren Vorder- und Rückflanke (98, 99) als Schneide ausgebildet ist, zum Bohren und Entgraten eines Werkstückes (12, 12'), dadurch gekennzeichnet, daß zunächst mindestens eine Durchgangsbohrung (13, 14) im Werkstück (12, 12') gebohrt wird, daß dann der axiale Werkzeugvorschub unter weiterer Rotation des Werkstücks (91, 91') in der Stellung stillgesetzt wird, in der die Entgratnut (97, 97'), deren axiale Länge gleich der Dicke des gebohrten Werkstücks ist, innerhalb der hergestellten Durchgangsbohrung (13, 14) angeordnet ist, und daß danach die das Werkzeug (91, 91') haltende nach wie vor rotierende Spannvorrichtung (55) im Bohr- und Entgratkopf (11) zum Entgraten verschwenkt wird.

## Claims

1. Drilling and deburring head (11) for clamping a drilling and deburring tool (91, 91') with a clamping device (55) comprising a clamping taper (57) and a clamping cone (61) said clamping device (55) being connectable rigidly, such that it cannot turn independently, to a driving element (21), said driving element (21) being connectable to a rotatingly driven drilling spindle or similar, said clamping device (55) being, with respect to its longitudinal axis (89), swivellably held in relation to the rotation axis (88) of the driving element (21) in such a manner that the clamping taper (57) is, by its rear region (56) comprising a spherical circumferential surface (66), movably held in a pot-shaped region (27) of the driving element (21), wherein the swivelling motion of the clamping device (55) in relation to the driving element (21) is effected by means of a preferably pneumatic piston-cylinder unit (31), said piston-cylinder unit (31) being pressurizable at one end, and wherein a return device (83, 85) is provided to return the clamping device (55) to its starting position.

2. Drilling and deburring head as defined in claim 1, wherein the clamping taper (57) is held by the return device (83, 85) in coaxial position in the pot-shaped region (27) of the driving element (21), said region (27) being provided with an inner cylindrical surface, said return device (83, 85) consisting of a screw (83) connected to the clamping taper (57) and engaging an axial bore of the driving element (21), and of a compression spring (85) supported between driving element (21) and screw head (86).

3. Drilling and deburring head as defined in claim 1 or 2, wherein the rear region (56) of the clamping taper (57) of the clamping device (55) can be acted upon from the back face by at least one pressure pin (53) such that it can be lifted off the base of the pot-shaped region (27) of the driving element (21), and wherein the back face of the clamping taper (57) is, diametrically opposite the pressure pin (53), provided with a forwardly inclined tilting surface (72) to form a tilting edge (75).

4. Drilling and deburring head as defined in claim 3, wherein the extent of the lifting-off motion of the clamping taper (57) is adjustable by means of an adjusting ring (74), said adjusting ring (74) being screwable onto the pot-shaped region (27) of the driving element (21).

5. Combination of a drilling and deburring head (11) as defined in any one of claims 1 to 4 and a drilling and deburring tool (91, 91') in the form of a drill with at least one main cutting edge (92) and at least one secondary cutting edge (93), said secondary cutting edge (93) being provided with at least one deburring groove (97) at a distance from the main cutting edge (92), the front and rear flanks (98, 99) of said deburring groove (97) being in the form of cutting edges, wherein the drilling and deburring tool (91, 91'), having the form of a twist drill, is clamped in the clamping device (55) of the drilling and deburring head (11) in such a manner that its deburring groove (97, 97') points in the direction of the swivelling motion.

6. Combination as defined in claim 5, wherein the deburring groove (97, 97') of the drilling and deburring tool (91, 91') is disposed diametrically opposite the pressure pin (53) performing the swivelling motion of the clamping device (55) and/or is clamped into the drilling and deburring head (11).

7. Application of a drilling and deburring tool (91, 91') clamped into the drilling and deburring head (11) as defined in any one of claims 1 to 4, said drilling and deburring tool (91, 91') being in the form of a drill with at least one main cutting edge (92) and at least one secondary cutting edge (93), said secondary cutting edge (93) being provided with at least one deburring groove (97) at a distance from the main cutting edge (92), the front and rear flanks (98, 99) of said deburring groove (97) being in the form of cutting edges, for the drilling and deburring of a workpiece (12, 12'), wherein, firstly, at least one through-hole (13, 14) is drilled in the workpiece (12, 12'), and wherein, then, the axial tool feed is, during further rotation of the workpiece (91, 91'), stopped in the position in which the deburring groove (97, 97'), the axial length of which is equal to the thickness of the drilled workpiece, is disposed within the produced through-hole (13, 14), and wherein, then, the still rotating clamping device (55) holding the tool (91, 91') is swivelled in the drilling and deburring head (11) for deburring.

## Revendications

1. Tête de forage et de chanfreinage (11) pour fixation d'un outil de forage et de chanfreinage (91, 91') avec un dispositif de serrage (55), comprenant un cône de montage femelle (57) et un cône de montage mâle (61), qui peut être accouplé en rotation par un élément d'entraînement (21) avec une broche rotative de perceuse ou avec un élément analogue, et qui est immobilisé de façon permettant l'inclinaison de son axe longitudinal (89) par rapport à l'axe de rotation (88) de l'élément d'entraînement (21), le cône de montage femelle (57) étant tenu avec une possibilité de mouvement par sa partie arrière (56) à surface périphérique (66) partiellement sphérique dans une partie (27) en forme de pot de l'élément d'entraînement (21), caractérisée en ce que le mouvement d'inclinaison du dispositif de serrage (55) par rapport à l'élément d'entraînement (21) est effectué au moyen d'un vérin (31) de préférence pneumatique qui est alimentable latéralement cependant qu'il est prévu un dispositif de rappel en redressement (83, 85) apte à remettre le dispositif de serrage (55) à sa position initiale.

2. Tête de forage et de chanfreinage selon la revendication 1 caractérisée en ce que le cône de montage femelle (57) est tenu en position coaxiale dans la partie (27) en forme de pot de l'élément d'entraînement (21) à surface cylindrique intérieure par le dispositif de rappel en redressement (83, 85) qui est constitué par une vis (83) de liaison avec le cône de montage femelle (57) s'introduisant dans un trou axial de l'élément d'entraînement (21) et par un ressort de compression (85) tenu comprimé entre l'élément d'entraînement (21) et la tête de vis (86).

3. Tête de forage et de chanfreinage selon la revendication 1 ou 2 caractérisée en ce que la partie arrière (56) du cône de montage (57) du dispositif de fixation (55) est éloignable et inclinable par rapport à la face arrière de fond de la partie en forme de pot (27) de l'élément d'entraînement (21) au moyen d'au moins une tige de poussée (53) cependant que la face arrière du cône de montage femelle (57) est prévue avec une surface de basculement (72) inclinée vers l'avant, diamétralement opposée à la tige de poussée (53) pour faire apparaître une arête de basculement (75).

4. Tête de forage et de chanfreinage selon la revendication 3 caractérisée en ce que l'amplitude du mouvement d'éloignement du cône de montage femelle (57) est réglable au moyen d'une bague d'arrêt (74) se vissant sur la partie en forme de pot (27) de l'élément d'entraînement (21)

5. Combinaison d'une tête de forage et de chanfreinage (11) selon l'une quelconque des revendications 1 à 4 et d'un outil de forage et de chanfreinage (91, 91') constitué par un foret pourvu d'au moins une arête de coupe principale (92) et d'une arête de coupe secondaire (93) et qui est muni à une certaine distance de l'arête de coupe principale (92) d'au moins une rainure de chanfreinage (97) dont le flanc avant (98) et le flanc arrière (99) sont conformés en moyens de coupe, caractérisée en ce que l'outil de forage et de chanfreinage (91, 91') qui possède l'apparence d'un foret hélicoïdal est serré dans le dispositif de serrage (55) de la tête de forage et de chanfreinage (11) de telle sorte que sa rainure de chanfreinage (97, 97') est tournée dans la direction du mouvement d'inclinaison.

6. Combinaison selon la revendication 5 caractérisée en ce que la rainure de chanfreinage (97, 97') de l'outil de forage et de chanfreinage (91, 91') est disposée par rapport à la tête de forage et de chanfreinage (11) de façon à être diamétralement opposée à la tige de poussée (53) servant au mouvement d'inclinaison du dispositif de fixation (55).

7. Utilisation d'un outil de forage et de chanfreinage (91, 91') fixé dans une tête de forage et de chanfreinage (11) selon l'une quelconque des revendications 1 à 4, constitué par un foret avec au moins une arête de coupe principale (92) et une arête de coupe secondaire (93) qui est prévue à une certaine distance de l'arête de coupe principale (92) avec au moins une rainure de chanfreinage (97) dont le flanc avant (98) et le flanc arrière (99) sont conformés en moyens de coupe, pour forer et ébavurer une pièce (12, 12'), caractérisée en ce que, tout d'abord, au moins un trou traversant (13, 14) est percé dans la pièce (12, 12'), ensuite pendant que la rotation de l'outil (91, 91') se poursuit son avance est stoppée dans la position où la rainure de chanfreinage (97, 97'), dont la longueur en sens axial est égale à l'épaisseur de la pièce percée, se trouve l'intérieur du trou traversant (13, 14) réalisé, et enfin le dispositif de serrage (55) en rotation et tenant l'outil (91, 91') comme avant est incliné dans la tête de forage et de chanfreinage (11) pour effectuer l'ébavurage.

Fig.1

Fig.2

Fig.3

Fig.4

Fig.5